# EUROPEAN PATENT APPLICATION

(11) **EP 4 629 206 A1**
(43) Date of publication of application: **08.10.2025**
(21) Application number: 24305541.5
(22) Date of filing: 05.04.2024
(51) Int. Cl.: G07F 7/08

(54) **BIOMETRIC PAYMENT INSTRUMENT BIOMETRIC PAYMENT INSTRUMENT AND METHOD FOR MANAGING A BIOMETRIC PAYMENT INSTRUMENT**

(71) Applicant: THALES DIS FRANCE SAS, 92190 Meudon (FR)
(72) Inventor: SALLES, Jean-Luc, 13720 La Bouilladisse (FR); SOUCHON, Pierre, 13600 Ceyreste (FR); CAMMAS, Guillaume, 13400 Aubagne (FR)
(74) Representative: Grevin, Emmanuel

(57) **Abstract**

The invention is a method for managing a payment instrument (10) able to manage a payment transaction with a payment terminal (20). The payment instrument includes a biometric sensor (54), biometric reference data (17), and a matching unit (16) that computes a matching score by comparing a captured biometric candidate data with the biometric reference data. The payment instrument records (S10) in a log (14) a sequence of matching scores computed by the matching unit and determines (S12) as many metadata as said matching scores, each of said metadata being associated with one of said matching scores and stores said metadata in the log. The payment instrument analyzes (S14) the sequence and metadata and decides, based on at least one predefined threshold, that providing an alert is necessary. The payment instrument provides (S16) the alert either directly to a user or to a remote server via the payment terminal.

## Description

### (Field of the invention)

The present invention relates to methods for managing payment instruments embedding a biometric sensor. It relates particularly to methods of managing biometric payment instruments deployed in the field.

### (Background of the invention)

Face-to-face financial transactions can be done today through the interaction of a payment instrument with a connected banking terminal, and the exchange of a payload with a remote server. For example, the financial transaction can be a payment transaction carried out via a Point-Of-Sale (POS) terminal. Alternatively, the financial transaction can be a cash withdrawal transaction carried out via an ATM (Automated Teller Machine) terminal. Such transactions are called in-person transactions (or proximity transactions) because the cardholder is at the same location as the terminal.

Conventional banking terminals can communicate with a payment instrument through a contact communication protocol (e.g. payment instrument inserted in the reader of the terminal) or contactless communication protocol (e.g. payment instrument is placed in proximity to the reader of the terminal).

A payment instrument can be a payment smart card embedding a biometric sensor like a fingerprint sensor. Usually, a biometric payment card has a non-volatile memory storing biometric reference data previously enrolled and a matching unit designed to compute a matching score by comparing a biometric candidate data captured by the biometric sensor with the registered biometric reference data. The matching score aims at authenticating the cardholder (i.e. card user).

### (Summary of the Invention)

It has been noted that some cardholders encounter issue when using their biometric payment card. Such issue may come from a change in their fingerprint due to wear and tear linked to manual work for craftsmen for example. In other situations, the problem (with usage of the biometric feature) could come from a change in the skin linked to the season or to natural growth in the case of children.

In some case, cardholders note that the biometric authentication no longer works, and continue to use their payment card in degraded mode by stopping using the biometric feature.

It would be useful to detect such malfunctions and to take a relevant action.

The invention aims at solving the above-mentioned technical problem.

An object of the present invention is a payment instrument assigned to a user and able to manage a payment transaction with a payment terminal. The payment instrument includes a biometric sensor, biometric reference data, and a matching unit designed to compute a matching score by comparing a biometric candidate data captured by the biometric sensor with the biometric reference data. The payment instrument comprises a monitoring unit configured to record in a log a sequence of matching scores computed by the matching unit. The monitoring unit is able to determine as many metadata as said matching scores, each of said metadata being associated with one of said matching scores and to store said metadata in the log. The payment instrument comprises an alerting unit configured to provide an alert either directly to said user or to a remote server via the payment terminal. The payment instrument comprises a checking unit configured to analyze both said sequence and metadata and to decide, based on at least one predefined threshold, to trigger the alerting unit to issue the alert.

Advantageously, the monitoring unit may be configured to determine, for a set of matching scores of the sequence, the metadata associated to each matching score of said set as a rolling average, the checking unit may be configured to assess an evolving trend of said rolling averages and to compute an indicator by comparing said rolling averages with the predefined threshold and the checking unit may be configured to decide to provide an alert requesting a renewal of enrollment of the biometric reference data based on the evolving trend and the indicator.

Advantageously, the monitoring unit may be configured to determine, for a set of matching scores of the sequence, the metadata associated to each matching score of said set as a timestamp, the predefined threshold may be a targeted usage level, the checking unit may be configured to use the log to assess a frequency of use of the biometric sensor, and the checking unit may be configured to decide to provide an alert requesting increasing usage of the biometric sensor if the frequency of use falls below the targeted usage level.

Advantageously, the monitoring unit may be configured to record in the log a track of transactions treated by the payment instrument without usage of the biometric sensor, said metadata reflecting whether or not the biometric sensor is used for each transaction, the predefined threshold may be a preset usage level, the checking unit may be configured to use the log to calculate a ratio between a number of transactions using the biometric sensor and a number of transactions without the biometric sensor and the checking unit may be configured to decide to provide an alert requesting increasing usage of the biometric sensor if the ratio falls below the preset usage level.

Advantageously, the payment instrument may embed a physical communication interface and the alerting unit may be configured to activate the physical communication interface to trigger the emission of a visual, audible or vibration signal for providing the alert to the user.

Advantageously, the alerting unit may be configured to prepare a specific alert payload and to send said specific alert payload to the remote server upon a next online transaction carried out through a payment appliance.

Advantageously, the biometric reference data may comprise a plurality of biometric templates, and the alerting unit may be configured to include in the specific alert payload at least one of the following: an history, a subset of said matching scores, a template update status, an updated template index, a percentage of covered surface, or a measured noise.

Advantageously, the specific alert payload may be conveyed as an Issuer Discretionary Data (IDD) compliant with EMV^{®} specifications.

Advantageously, the payment instrument may be a smart card, a ring, a keychain, or a bracelet.

Another object of the present invention is a system comprising a payment instrument according to the invention and a distant server. The alerting unit is configured to prepare a specific alert payload) and to send said specific alert payload to the distant server upon a next online transaction carried out through a payment appliance. The distant server comprises a monitoring unit configured to send an alert message depending on said specific alert payload to a personal apparatus previously registered as being assigned to a user of the payment instrument.

Another object of the present invention is a method for managing a payment instrument assigned to a user and able to manage a payment transaction with a payment terminal. The payment instrument includes a biometric sensor, biometric reference data, and a matching unit designed to compute a matching score by comparing a biometric candidate data captured by the biometric sensor with the biometric reference data. The payment instrument records in a log a sequence of matching scores computed by the matching unit. The payment instrument determines as many metadata as said matching scores, each of said metadata being associated with one of said matching scores and stores said metadata in the log. The payment instrument analyzes said sequence and metadata and decides, based on at least one predefined threshold, that providing an alert is necessary. The payment instrument provides said alert either directly to said user or to a remote server via the payment terminal.

Advantageously, the monitoring unit may determine the metadata associated to each matching score of a set of matching scores of the sequence as a rolling average, the checking unit may assess an evolving trend of said rolling averages and compute an indicator by comparing said rolling averages with the predefined threshold and the checking unit may decide to provide an alert requesting a renewal of enrollment of the biometric reference data based on the evolving trend and the indicator.

Advantageously, the monitoring unit may determine the metadata associated to each matching score of a set of matching scores of the sequence as a timestamp, the predefined threshold may be a targeted usage level, the checking unit may use the log to assess a frequency of use of the biometric sensor, and the checking unit may decide to provide an alert requesting increasing usage of the biometric sensor if the frequency of use falls below the targeted usage level.

Advantageously, the monitoring unit may record in the log a track of transactions treated by the payment instrument without usage of the biometric sensor, said metadata reflecting whether or not the biometric sensor is used for each transaction, the predefined threshold may be a preset usage level, the checking unit may use the log to calculate a ratio between a number of transactions using the biometric sensor and a number of transactions without the biometric sensor and the checking unit may decide to provide an alert requesting increasing usage of the biometric sensor if the ratio falls below the preset usage level.

Advantageously, the alerting unit may prepare a specific alert payload and send said specific alert payload to the remote server upon a next online transaction carried out through a payment appliance, the biometric reference data may comprise a plurality of biometric templates, and the alerting unit may include in the specific alert payload at least one of the following: an history, a subset of said matching scores, a template update status, an updated template index, a percentage of covered surface, or a measured noise.

### (Brief description of the drawings)

Other characteristics and advantages of the present invention will emerge more clearly from reading the following description of a number of preferred embodiments of the invention with reference to the corresponding accompanying drawings in which:
- Fig. 1 shows a diagram of architecture of a payment instrument according to an example of the invention,
- Fig. 2 shows a first exemplary log created in the payment instrument according to a first example of the invention,
- Fig. 3 shows a second exemplary log created in the payment instrument according to a second example of the invention,
- Fig. 4 shows a third exemplary log created in the payment instrument according to a third example of the invention;
- Fig. 5 shows a diagram of architecture of a system for managing a payment instrument according to an example of the invention; and
- Fig. 6 shows a flow diagram for managing a payment instrument according to an example of the invention.

### (Detailed description of the preferred embodiments)

The invention may apply to any type of biometric payment instrument usually associated to a user (also called cardholder). The payment instrument may be implemented in a wide variety of form factors such as physical smart card, smartwatch, or wearable device for instance.

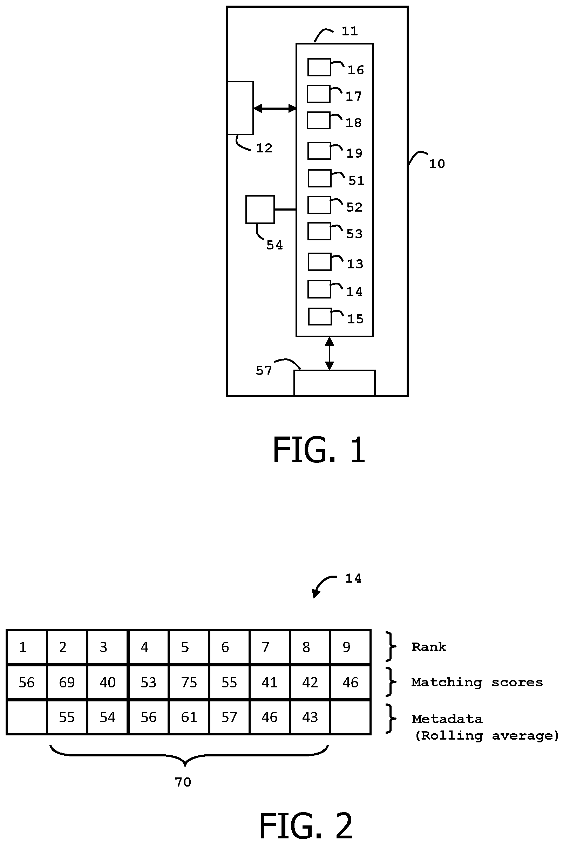

Figure 1 shows a diagram of architecture of a payment instrument according to an example of the invention.

In this example, the payment instrument 10 is a physical banking card intended to be used by its associated genuine user (i.e. bank customer or cardholder) for payment transactions or cash withdrawals.

The payment instrument 10 embeds a secure element 11 comprising a hardware processing unit, a non-volatile memory storing an operating system, and at least one conventional banking application 18 designed to contribute to payment services.

The payment instrument 10 can be a proximity card comprising a contactless unit 12 able to communicate through a contactless protocol as defined by the ISO 14443 standard or Near Field Communications (NFC) standards for instance.

In some embodiments, the payment instrument can be configured to communicate through a contact communication protocol in addition to the contactless communication protocol. In some embodiments, the payment instrument can be configured to communicate through a contact communication protocol only.

The payment instrument 10 comprises a fingerprint sensor 54 and biometric reference data 17 enrolled during a previous phase. The payment instrument 10 comprises a matching unit 16 which is designed to compute a matching score by comparing a biometric candidate data captured by the biometric sensor with the biometric reference data 17.

The payment instrument comprises a monitoring unit 13 that is configured to record in a log 14 a sequence of matching scores computed by the matching unit. The log is stored in the non-volatile memory of the payment card 10 and may take the form any appropriate container like a file or a database for instance.

The monitoring unit 13 is able to determine as many metadata as available matching scores. In some embodiments, the monitoring unit computes each metadata from the matching score with which it is associated. In some embodiments, the monitoring unit generates each metadata from a value extracted from parameters of the transaction during which the associated matching score is computed.

Most of the time, a determined metadata is allocated to its corresponding matching score and stored into the log. Typically, the log can contain a series of pairs "value of matching score" + "associated metadata".

The payment instrument comprises an alerting unit 19 which is configured to provide an alert either directly to the user through a user interface embedded in the payment instrument or to a remote server via the terminal to which the payment instrument is connected.

The payment instrument comprises a checking unit 15 which is configured to analyze both the sequence of matching scores and metadata stored in the log 14 and to decide, based on at least one predefined threshold, to trigger the alerting unit to issue the alert.

As detailed below, the type of the alert can depend on the kind of analyze carried out by the checking unit.

Figure 2 depicts an exemplary log created in the payment instrument according to a first example of the invention.

The log 14 contains a sequence of 9 matching scores that have been generated by the card during a number of transactions involving the card.

In order to clarify the reading of the log 14 shown at Figure 2, a first row has been added to indicate the rank of each matching score of the sequence of matching scores.

The second row contains the value of the latching scores and the third row contains the metadata. For instance, the fifth matching score has a value equal to 75 and an associated metadata equal to 61. In real implementations, the log can be devoid of the row dedicated to the rank.

Metadata have been computed by the monitoring unit 13 for a set 70 comprising 7 matching scores (second to eighth matching score) of the log. In this example, each metadata is a rolling average computed from both the matching score allocated to the metadata, its direct predecessor, and its direct successor. In the example of Fig. 2, the same weight has been applied to the three values of matching score for generating the corresponding rolling average. Thus, the metadata assigned to the sixth matching score is equal to 57 (i.e. the third of 75+55+41) .

In some embodiments, different weights may be applied to the matching score values used to compute the rolling average.

In the example of Figure 2, each rolling average has been computed from 3 consecutive matching score values. In some embodiments, each rolling average can be computed from 5 or more consecutive matching score values.

In some embodiments the payment instrument can be configured to emit an alert asking or suggesting enrolling new biometric reference data into the payment instrument. The monitoring unit can have generated the log 14 as shown at Figure 2. The checking unit 15 can be designed to assess the evolving trend of the rolling averages and to compute an indicator by comparing the rolling averages with a predefined threshold. The checking unit 15 can be configured to decide to provide an alert requesting a renewal of enrollment of the biometric reference data 17 based on the evolving trend and the indicator.

For instance, the checking unit 15 can be set to detect that the last three rolling averages (ranks 6 to 8) go in decreasing direction and that that last three matching score values (ranks 7 to 9) are lower than a predefined quality level 51 which may be set to 50 for example. Thus, since 57 > 46 > 43 and the three matching score values 41, 42 and 46 are all below 50, the checking unit 15 can decide to provide an alert requesting the user to enroll new biometric refence data. The above-described checking unit is configured with a rule which assumes that the degradation of the matching scores comes from a deterioration of the fingerprints presented to the biometric sensor.

As can be understood by those skilled in the art, different rules may be configured in the checking unit, in particular the number of rolling averages or metadata to be taken into account by the checking unit may vary.

According to some embodiments of the invention, the payment instrument can detect a gradual degradation of the matching scores it computes and trigger an appropriate alert to warn the user.

Due to memory size constraints, the card can be configured to store in the log the N last matching scores (and the associated metadata) where N can be an integer between 10 and 25. The oldest matching scores are therefore gradually deleted from the storage area.

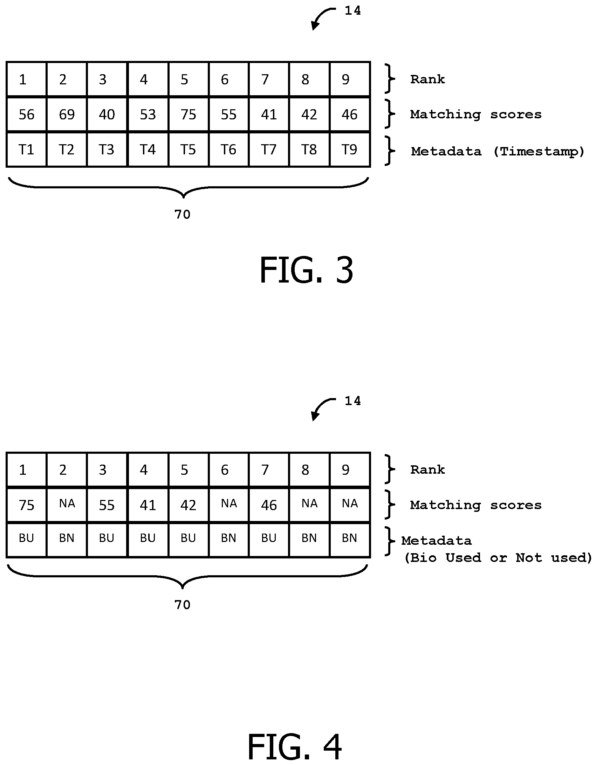

Figure 3 depicts an exemplary log created in the payment instrument according to a second example of the invention.

The log 14 contains a sequence of 9 matching scores that have been generated by the card during a number of transactions involving the card.

For clarity purpose and as was done at Figure 2, a first row has been added to indicate the rank of each matching score of the sequence of matching scores.

Metadata have been identified by the monitoring unit 13 for a set 70 comprising 9 matching scores (first to ninth matching score).

For each matching score, a metadata has been identified from parameters of the financial transaction involving the generation of the matching score. Each metadata is initialized with the transaction time extracted from transaction data received by the payment instrument. Thus, the monitoring unit 13 applies a timestamp to each matching score generated for a transaction.

It can be noted that if two or more matching scores are computed during the same transaction (probably because some of them failed to reach the minimum acceptable level to authenticate the user), the same time may be assigned (as metadata) to these matching scores.

Thus, the card can analyze the frequency of use of the Biometric sensor and send an alert intended to remind the user of the availability of the biometric authentication feature in the card.

Once the monitoring unit determined a timestamp as metadata for each matching score of the set 70, the checking unit 15 can use the content of the log 14 (comprising the metadata) to assess a frequency of use of the biometric sensor. The checking unit 15 can decide to provide an alert requesting increasing usage of the biometric sensor if the frequency of use falls below a targeted usage level 52.

For instance, the targeted usage level 52 can be set to 72 hours, 12 days, or 2 months. The checking unit 15 can compute a duration between the timestamps associated to the last two matching scores (ranks 8 & 9) and trigger the corresponding alert if the duration exceeds the targeted usage level 52.

The targeted usage level 52 can be initialized at a personalization phase or updated on the field according to the profile of the card user.

The analyze of the log by the checking unit 15 can be triggered by the occurrence of a financial transaction in which the card participates or any other event in which the card is sufficiently supplied with energy.

Figure 4 depicts an exemplary log created in the payment instrument according to a third example of the invention.

For clarity purpose and as was done at Figure 2, a first row has been added to indicate the rank of each matching score of the sequence of matching scores.

In this case, the card has been involved in 9 consecutive financial transactions. Some of these transactions occurred with a biometric authentication while some other occurred without biometric authentication.

The monitoring unit can be designed to record in the log 14 a track of transactions treated by the payment instrument without usage of the biometric sensor 54 (in addition to track of transactions performed using the biometric sensor).

The log 14 contains elements coming from a sequence comprising 5 user authentications with biometric sensor activation (ranks 1, 3, 4, 5 and 7) interleaved with 4 user authentications without biometric sensor activation (ranks 2, 6, 8 and 9). For each transaction, the metadata contain a value indicating whether the biometric authentication occurred ("BU") or not ("BN"). Since some user authentications occurred without use of the biometric sensor, some items of the log contain a value "NA" meaning that no matching score has been generated for the corresponding user authentications. Obviously, the values "NA", "BU" and "BN" are examples that can be replace with any other appropriate values.

The monitoring unit 13 identified each metadata from user authentications (linked to financial transactions) involving or not the generation of the matching score.

The checking unit 15 can use the content of the log 14 to calculate a ratio between a number of user authentications using the biometric sensor and a number of user authentications without the biometric sensor and decide to provide an alert requesting increasing usage of the biometric sensor if the ratio falls below a preset usage level 53.

For instance, assuming that the checking unit 15 compute the ratio from the last nine elements stored in the log (i.e. ranks 1 to 9), the ratio would be equal to 5/9 (= 0.55). If the preset usage level 53 is set to 0.7 (corresponding to 70% of user authentications using the biometric sensor), the checking unit 15 can decide to send an appropriate alert in order to encourage the user to user the biometric authentication more often.

In some embodiment, the checking unit 15 can compute the ratio as a dynamic using weight more important for the n last user authentications.

Thanks to some embodiments of the invention, the payment instrument can detect that the ratio of use biometric vs non biometric is abnormally low and provide corresponding feedback to inform the user or the issuer of the payment instrument.

In some embodiments, the payment instrument can embed a user interface and provide direct feedback to the user. For example, the payment instrument can embed a physical communication interface 57 like LED or a display and the alerting unit 19 can be adapted to activate the physical communication interface to trigger the emission of a visual signal for providing the alert to the user. The payment instrument can light one or more diodes in a predetermined sequence (of colors or locations) indicating the need for an action of the user like the enrollment of additional biometric reference data in the payment instrument.

Alternatively, the physical communication interface can be able to generate an audio or vibration signal.

In some embodiments, the alerting unit 19 can be configured to prepare a specific alert payload 55 and to send this specific alert payload to a remote server 30 upon a next online transaction carried out through a payment appliance. The remote server 30 can be a hardware server acting on behalf of the issuer of the payment instrument. The payment appliance can be a POS terminal or an ATM.

In some embodiments, the alerting unit 19 can be configured to send the specific alert payload 55 as an Issuer Discretionary Data (IDD) compliant with EMVCo^{®} specifications.

In some embodiments, the biometric reference data 17 comprise a plurality of biometric templates and the alerting unit 19 can be designed to include in the specific alert payload 55 at least one of the following items: an history, a subset of the matching scores stored in the log 14, a template update status, an updated template index, a percentage of covered surface (of the finger), and a measured noise. The remote server 30 can be configured to extract the item(s) conveyed in the received specific alert payload 55 and to analyze the item(s) to detect a possible source or cause of malfunction or obstacle to the use of the biometric authentication.

In some embodiments, the remote server 30 can be configured to see that user authentications are generally successful with a matching score higher than 75 but from time to time they fail with a matching score lower than 25. In this case, the server 30 can deduce that an inconsistent finger (which could be presented by a malicious person without the knowledge of the genuine user) is presented regularly or sporadically to the biometric sensor. The server 30 can apply appropriate security or improvement measures and notify the user.

Although the payment instrument embeds a fingerprint sensor in the above presented examples, the invention also applies to payment instruments embedding one or more biometric sensors dedicated to other type of biometric data like iris, blood rhythm, face, or behavioral data.

In some embodiments, the payment instrument can be a physical smart card, a payment ring, a payment keychain, or a payment bracelet for instance.

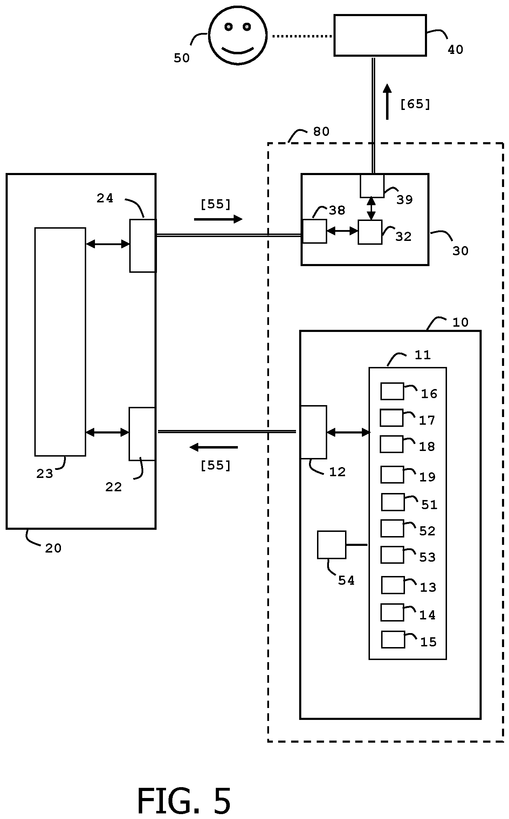

Figure 5 shows a diagram of architecture of a system 80 for managing payment instruments according to an example of the invention.

In this example, the system 80 is a payment system comprising both a payment instrument 10 assigned to a user 50 and a distant server 30 acting on behalf of the issuer of the payment system. The payment instrument 10 is a payment smart card similar to that described in Figure 1, with one difference: it may not include a man-machine interface 57.

The alerting unit 19 is configured to prepare a specific alert payload 55 and to send the specific alert payload to the distant server 30 upon a next online transaction carried out through a coupled appliance 20. The payment instrument can send the specific alert payload 55 encapsulated in a conventional message (i.e. in a unused field/tag of the EMV^{®} flow for instance) or in a message built with a proprietary format. The coupled appliance 20 can be a payment terminal or an ATM. The coupled appliance 20 comprises both a reader 22 able to communicate with the payment instrument 10 and a communication interface 24 able to communicate with the distant server 30 via a public or private network. The coupled appliance 20comprise a payment application 23 which is configured to forward the specific alert payload 55 to the distance server 30.

The distant server 30 comprises a first communication unit 38 able to communicate with the appliance 20 (via the Internet for instance) and a second communication unit 39 able to communicate with a personal apparatus 40 via a combination of wired network and Telecom network for instance.

The distant server 30 comprises a monitoring unit 32 configured to send an alert message 65 depending on the content of the specific alert payload to the personal apparatus 40 which has been previously registered as being assigned to the user 50 of the payment instrument 10. The personal apparatus 40 can be a phone, a tablet PC, a desktop, or a laptop for example.

The distant server 30 comprises a hardware processor and program instructions designed to be executed by the hardware processor to provide the services required by the different embodiments of the invention.

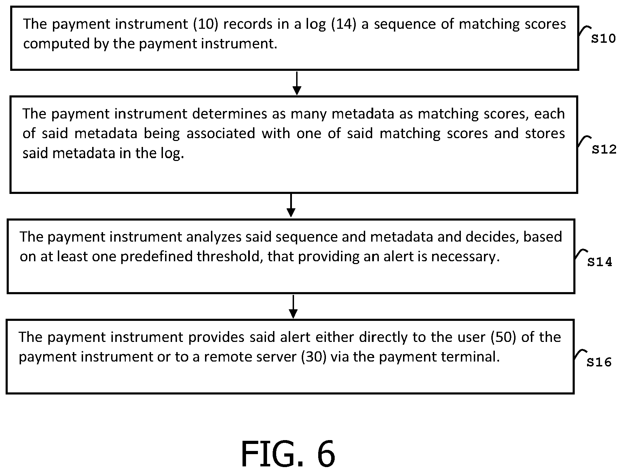

Figure 6 depicts a flow diagram for managing a payment instrument according to an example of the invention.

The payment instrument can be the payment card of Figure 1 for example.

As financial transactions occur, the card 10 progressively populates its log 14 with parameters of the transaction or matching score values computed by the matching unit of the card (step S10).

The card 10 determines (step S12) as many metadata as stored matching scores. Note that in the case of metadata computed as rolling averages, the oldest and most recent matching scores may have an empty or zero associated metadata.

Each of the determined metadata is uniquely associated with one of the matching scores. The log 14 contain pairs consisting of a matching score and its assigned metadata.

Upon a preset event, the card analyzes (step S14) the content of the log (e.g. sequence of matching scores and metadata) and decides, based on at least one predefined threshold, that providing an alert is necessary. The preset event can be the update of the log, the end or the beginning of a financial transaction, or the startup/booting of the operating system for example.

Then, the payment instrument provides (step S16) the alert either directly to the card user or to a remote server 30 via the terminal to which it is coupled.

In some embodiments, the monitoring unit can generate the metadata associated to each matching score of a set of matching scores of the sequence as a rolling average of the matching scores. The rolling average is also called moving average. Preferably it is computed as an unweighted mean of the previous and next N items of the sequence of matching scores. Other well-known mathematical formula can be considered for computing the rolling average. The checking unit 15 can assess the evolving trend of the rolling averages and compute an indicator by comparing the rolling averages with a predefined threshold. Then the checking unit 15 can make the decision to provide an alert requesting a renewal of enrollment of the biometric reference data (stored in the card) based on the evolving trend and the indicator.

In some embodiments, the monitoring unit can set the metadata with a time (date/hour/timestamp) corresponding to the financial transaction for which the associated matching score has been generated. The checking unit can use the content of the log to assess a frequency of use of the biometric sensor. Then the checking unit 15 can decide to provide an alert requesting increasing usage of the biometric sensor if the frequency of use falls below a targeted usage level 52.

The targeted usage level 52 can be defined as a duration expressed in hours, days or months for instance.

During a financial transaction, the card user can be authenticated based on a typed secret code (like a PIN code) or even implicitly authenticated when the amount is lower than a preset limit for contactless transactions.

In some embodiments, the monitoring unit can record in the log of the card a track of user authentications treated by the payment instrument without usage of the biometric sensor in addition to the track of user authentications performed using the biometric sensor. Thus, the metadata can reflect whether or not the biometric sensor has been used for each user authentication (or transaction). The checking unit 15 can use the content of the log to calculate a ratio between a number of user authentication(s) made using the biometric sensor and a number of user authentication(s) performed without the biometric sensor. Then the checking unit can decide to provide an alert requesting increasing usage of the biometric sensor if the ratio falls below the preset usage level 53. For instance, if less than 50 percent of the user authentications performed by the card are done without using the biometric sensor, the card can provide an alert to the card user.

In some embodiments, the alerting unit 19 can prepare a specific alert payload and send it to the remote server 30 upon a next online transaction carried out through a payment appliance. In addition to the alert message, the specific alert payload can comprise one or more of the following items: An history, a subset of the stored matching scores, a template update status, an updated template index, a percentage of covered surface, or a measured noise related to data captured by the sensor.

The invention is not limited to the described embodiments or examples. In particular, the described examples and embodiments may be combined.

The invention is not limited to Banking smart cards and applies to any payment instruments embedding a biometric sensor and able to participate to a financial transaction.

Thanks to some embodiments of the invention, the payment instrument is able to detect that a specific action (regardless of the current transaction treatment) should be done by the user to improve the use of the payment instrument in the future.

Thanks to some embodiments of the invention, the payment instrument can detect either a way to improve use of the payment instrument or a malfunction of the biometric feature even if the user is not aware of the degraded operation of the payment instrument.

Thanks to some embodiments of the invention, the payment instrument can provide internal parameters that can be analyzed by a remote server to detect either a way to improve use of the payment instrument or a malfunction of the biometric feature.

Thanks to some embodiments of the invention, the payment instrument can detect use of the biometric sensor by a person who is not supposed to activate it.

## Claims

1. A payment instrument (10) assigned to a user (50) and able to manage a payment transaction with a payment terminal (20), the payment instrument including a biometric sensor (54), biometric reference data (17), and a matching unit (16) designed to compute a matching score by comparing a biometric candidate data captured by the biometric sensor with the biometric reference data,
wherein the payment instrument comprises a monitoring unit (13) configured to record in a log (14) a sequence of matching scores computed by the matching unit,
wherein the monitoring unit is able to determine as many metadata as said matching scores, each of said metadata being associated with one of said matching scores and to store said metadata in the log,
wherein the payment instrument comprises an alerting unit (19) configured to provide an alert either directly to said user or to a remote server (30) via the payment terminal, and
wherein the payment instrument comprises a checking unit (15) configured to analyze both said sequence and metadata and to decide, based on at least one predefined threshold, to trigger the alerting unit (19) to issue the alert.

2. The payment instrument according to claim 1, wherein the monitoring unit is configured to determine, for a set (70) of matching scores of the sequence, the metadata associated to each matching score of said set as a rolling average, wherein the checking unit (15) is configured to assess an evolving trend of said rolling averages and to compute an indicator by comparing said rolling averages with the predefined threshold and wherein the checking unit (15) is configured to decide to provide an alert requesting a renewal of enrollment of the biometric reference data (17) based on the evolving trend and the indicator.

3. The payment instrument according to claim 1, wherein the monitoring unit is configured to determine, for a set (70) of matching scores of the sequence, the metadata associated to each matching score of said set as a timestamp, wherein the predefined threshold is a targeted usage level (52), wherein the checking unit (15) is configured to use the log to assess a frequency of use of the biometric sensor, and wherein the checking unit (15) is configured to decide to provide an alert requesting increasing usage of the biometric sensor if the frequency of use falls below the targeted usage level (52) .

4. The payment instrument according to claim 1, wherein the monitoring unit is configured to record in the log (14) a track of transactions treated by the payment instrument without usage of the biometric sensor (54), said metadata reflecting whether or not the biometric sensor is used for each transaction, wherein the predefined threshold is a preset usage level (53), wherein the checking unit (15) is configured to use the log to calculate a ratio between a number of transactions using the biometric sensor and a number of transactions without the biometric sensor and wherein the checking unit (15) is configured to decide to provide an alert requesting increasing usage of the biometric sensor if the ratio falls below the preset usage level (53).

5. The payment instrument according to any claim 1 to 4, wherein the payment instrument embeds a physical communication interface (54) and wherein the alerting unit (19) is configured to activate the physical communication interface to trigger the emission of a visual, audible or vibration signal for providing the alert to the user.

6. The payment instrument according to any claim 1 to 4, wherein the alerting unit (19) is configured to prepare a specific alert payload (55) and to send said specific alert payload to the remote server (30) upon a next online transaction carried out through a payment appliance.

7. The payment instrument according to claim 6, wherein the biometric reference data (17) comprises a plurality of biometric templates, and wherein the alerting unit (19) is configured to include in the specific alert payload at least one of the following: an history, a subset of said matching scores, a template update status, an updated template index, a percentage of covered surface, or a measured noise.

8. The payment instrument according to claim 6 or 7, wherein the specific alert payload is conveyed as an Issuer Discretionary Data, IDD, compliant with EMV^{®} specifications.

9. The payment instrument according to claim 1, wherein the payment instrument is a smart card, a ring, a keychain, or a bracelet.

10. A system (80) comprising the payment instrument (10) according to claim 1 and a distant server (30),
wherein the alerting unit (19) is configured to prepare a specific alert payload (55) and to send said specific alert payload to the distant server upon a next online transaction carried out through a payment appliance, and wherein the distant server comprises a monitoring unit (32) configured to send an alert message (65) depending on said specific alert payload to a personal apparatus (40) previously registered as being assigned to a user (50) of the payment instrument.

11. A method for managing a payment instrument (10) assigned to a user (50) and able to manage a payment transaction with a payment terminal (20), the payment instrument including a biometric sensor (54), biometric reference data (17), and a matching unit (16) designed to compute a matching score by comparing a biometric candidate data captured by the biometric sensor with the biometric reference data,
wherein the payment instrument records (S10) in a log (14) a sequence of matching scores computed by the matching unit,
wherein the payment instrument determines (S12) as many metadata as said matching scores, each of said metadata being associated with one of said matching scores and stores said metadata in the log,
wherein the payment instrument analyzes (S14) said sequence and metadata and decides, based on at least one predefined threshold, that providing an alert is necessary,
wherein the payment instrument provides (S16) said alert either directly to said user or to a remote server (30) via the payment terminal.

12. The method according to claim 11, wherein the monitoring unit determines the metadata associated to each matching score of a set of matching scores of the sequence as a rolling average, wherein the checking unit (15) assesses an evolving trend of said rolling averages and computes an indicator by comparing said rolling averages with the predefined threshold and wherein the checking unit (15) decides to provide an alert requesting a renewal of enrollment of the biometric reference data (17) based on the evolving trend and the indicator.

13. The method according to claim 11, wherein the monitoring unit determines the metadata associated to each matching score of a set (70) of matching scores of the sequence as a timestamp, wherein the predefined threshold is a targeted usage level (52), wherein the checking unit uses the log to assess a frequency of use of the biometric sensor, and wherein the checking unit (15) decides to provide an alert requesting increasing usage of the biometric sensor if the frequency of use falls below the targeted usage level (52).

14. The method according to claim 11, wherein the monitoring unit records in the log (14) a track of transactions treated by the payment instrument without usage of the biometric sensor (54), said metadata reflecting whether or not the biometric sensor is used for each transaction, wherein the predefined threshold is a preset usage level (53), wherein the checking unit (15) uses the log to calculate a ratio between a number of transactions using the biometric sensor and a number of transactions without the biometric sensor and wherein the checking unit (15) decides to provide an alert requesting increasing usage of the biometric sensor if the ratio falls below the preset usage level (53).

15. The method according to claim 11, wherein the alerting unit (19) prepares a specific alert payload (55) and sends said specific alert payload to the remote server (30) upon a next online transaction carried out through a payment appliance, wherein the biometric reference data (17) comprises a plurality of biometric templates, and wherein the alerting unit (19) includes in the specific alert payload at least one of the following: an history, a subset of said matching scores, a template update status, an updated template index, a percentage of covered surface, or a measured noise.
